# EUROPÄISCHE PATENTSCHRIFT

(11) **EP 1 338 365 B1**
(45) Veröffentlichungstag und Bekanntmachung des Hinweises auf die Patenterteilung: **12.05.2004**
(21) Anmeldenummer: 02405207.8
(22) Anmeldetag: 18.03.2002
(51) Int. Cl.: B23G 1/18, B23G 3/08

(54) **Gewindeschneid-Vorrichtung**
Threading device
Dispositif de taraudage

(30) Priorität: 26.02.2002 CH 3352002
(43) Veröffentlichungstag der Anmeldung: 27.08.2003
(73) Patentinhaber: Otto Suhner AG, 5200 Brugg (CH)
(72) Erfinder: Stutz, Peter, 5406 Rütihof (CH)
(74) Vertreter: Gachnang, Hans Rudolf

(56) Entgegenhaltungen:
- EP-A- 0 403 423
- DE-A- 2 741 100
- GB-A- 1 465 978
- GB-A- 2 031 772
- US-A- 3 041 640
- US-A- 3 690 782

## Beschreibung

Gegenstand der Erfindung ist eine Gewindeschneid-Vorrichtung gemäss Oberbegriff des Patentanspruchs 1.

Gewindeschneid-Vorrichtungen dieser Gattung sind bekannt (Siehe z.B. DE 2 741 100). Sie finden vor allem Verwendung in universell einsetzbaren Bearbeitungszentren, auf denen aus verschiedenen Richtungen Bohrungen und Gewinde in das Werkstück eingebracht werden müssen. Sie finden aber auch Verwendung im Kleinserienbau, wo häufig die Dimension der Bohrung oder des Gewindes oder die Steigung des letzteren verändert werden muss. Aus diesem Grunde können an herkömmlichen Gewindeschneid-Vorrichtungen durch Austausch von Radkränzen an den Vorgelegen die Gewindesteigungen verhältnismässig rasch geändert werden.

Bei bekannten Gewindeschneid-Vorrichtungen wird die Leitspindelwelle durch einen ersten Übertrieb vom Antriebsmotor direkt angetrieben und die Leitmutter über ein Vorgelege zwischen der Leitspindelwelle und der Leitmutter. Die festen Achsabstände zwischen der Leitspindelwelle und der Leitmutterwelle bedingen zwangsläufig das Auswechseln jeweils beider Ritzel, um das Übersetzungsverhältnis zu ändern. Um den Wechsel vornehmen zu können, muss das üblicherweise mindestens teilweise mit öl gefüllte Getriebegehäuse geöffnet und die beiden Zahnräder durch andere ausgetauscht werden. Diese Arbeit ist aufwendig und es ergibt sich dabei ein Betriebsunterbruch von längerer Dauer. Im weiteren besteht zwischen den beiden Wechselrädern stets ein Spiel, das nicht aufgehoben werden kann und das zu nicht unbedeutenden Toleranzfehlern bei der Gewindeherstellung führen kann, weil bei jeder Gewindeherstellung nach dem Vorschub, d.h. nach dem Schneiden des Gewindes, ein Rückschub zu erfolgen hat, um das Schneidwerkzeug wieder aus dem Gewindebereich herauszuführen. Der Rückschub erfolgt durch Drehrichtungs-Umkehr und folglich bewirkt auch das geringste Spiel im Vorgelege entsprechende Toleranzschwankungen.

Aufgabe der Erfindung ist die Schaffung einer Gewindeschneid-Vorrichtung, bei der die Änderung der Gewindesteigung innert kürzest möglicher Frist durchgeführt werden kann und die auch bei Drehrichtungsumkehr spielfrei arbeitet.

Gelöst wird diese Aufgabe durch eine Gewindeschneid-Vorrichtung gemäss den Merkmalen des Patentanspruchs 1.

Weitere vorteilhafte Ausgestaltungen der Gewindeschneid-Vorrichtung sind in den abhängigen Ansprüchen definiert.

Es gelingt mit der erfindungsgemässen Vorrichtung, die Stillstandszeit der Gewindeschneid-Vorrichtung zeitlich auf einen Bruchteil zu reduzieren, da nur das Zahnriemenrad auf der Leitmutterwelle ausgewechselt werden muss und zudem durch Verwendung eines Zahnriemens kein Öl im Getriebegehäuse benötigt wird. Zudem kann durch den Einsatz eines Zahnriemens der spielfreie Übertrieb gewährleistet werden. Der durch diese Massnahmen resultierende einfache Aufbau des Getriebes ermöglicht es, den Antriebsmotor wahlweise auf der einen oder andern Seite des Getriebegehäuses zu befestigen und so entweder die Gesamtlänge der Vorrichtung zu verkürzen oder über dem Leitspindelgehäuse freien Raum zu schaffen. Dies erlaubt den Einsatz der Gewindeschneid-Vorrichtung auch in beengten Verhältnissen.

Anhand eines illustrierten Ausführungsbeispiels wird die Erfindung näher erläutert. Es zeigen
- Figur 1: eine perspektivische Darstellung einer Gewindeschneid-Vorrichtung mit über der Leitspindelwelle liegendem Motor,
- Figur 2: die Gewindeschneid-Vorrichtung von der Getriebeseite mit abgenommenem Getriebegehäusedeckel,
- Figur 3: die Gewindeschneid-Vorrichtung von der Getriebeseite mit leitspindelseitig aufgesetzter Lagerplatte,
- Figur 4: die Gewindeschneid-Vorrichtung ohne Leitspindelgehäuse mit dem Leitgewindegehäuse abgewandt montiertem Motor,
- Figur 5: eine teilweise aufgeschnittene Gewindeschneid-Vorrichtung.

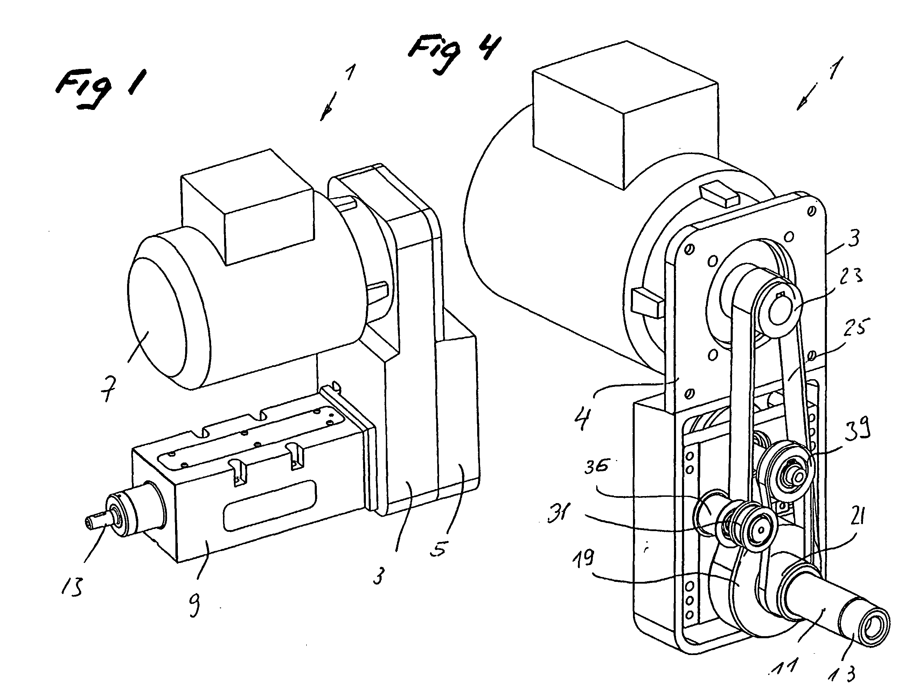

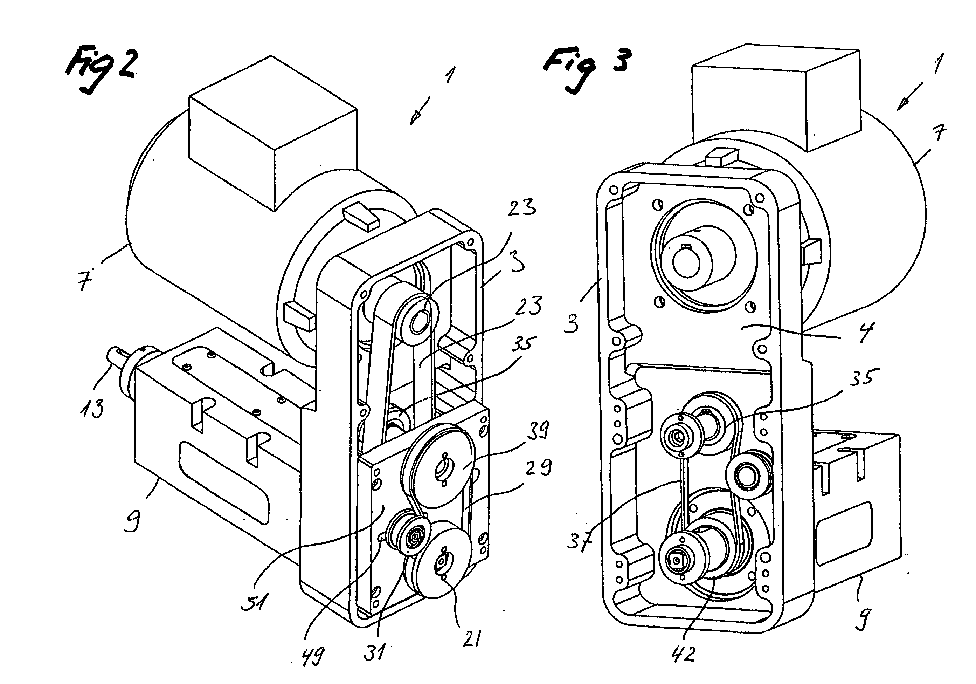

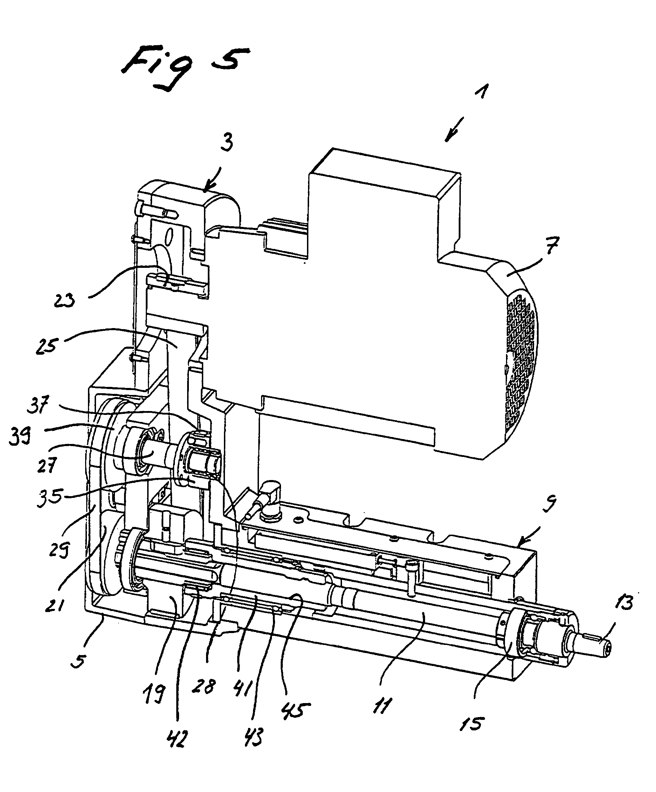

In den Figuren ist mit Bezugszeichen 1 eine Gewindeschneid-Vorrichtung bezeichnet, welche ein Getriebegehäuse 3 mit einer Motortragplatte 4 sowie einem Getriebegehäusedeckel, kurz Deckel 5, umfasst. An letzterem ist oben ein Antriebsmotor, kurz Motor 7, und unten ein Leitspindelgehäuse 9 angeflanscht bzw. befestigt. In der Schnittzeichnung gemäss Figur 5 und in den Figuren 1 bis 3 ist der Motor 7 leitspindelseitig am Getriebegehäuse 3 befestigt; im Beispiel gemäss Figur 4 sitzt der Motor 7 auf der dem Leitspindelgehäuse 9 gegenüberliegenden Seite des Getriebegehäuses 3 und schafft über dem Leitspindelgehäuse 9 Raum für ein zu bearbeitendes Werkstück. Der Motor 7 ist drehzahlgesteuert und in beiden Drehrichtungen betreibbar. Im Leitspindelgehäuse 9 sitzt - kurz zusammengefasst - eine Leitspindel 11, an deren vorderem Ende 13 ein herkömmliches Gewindeschneid- oder Bohrwerkzeug aufsetzbar ist. Ein im Leitspindelgehäuse 9 eingesetztes Wälzlager 15 trägt die Leitspindel 11 an deren vorderem Ende. Das hintere Ende 17 der Leitspindel 11 trägt ein Leitspindel-Antriebszahnrad 19 und ein Leitspindel-Abtriebszahnrad 21. Das Leitspindel-Antriebszahnrad 19 steht in Antriebsverbindung mit dem Motor-Abtriebszahnrad 23. In Figur 5 ist das vordere Trum des die beiden Zahnräder 19 und 23 verbindenden Hauptzahnriemens 25 der besseren Übersichtlichkeit halber nicht dargestellt.

Über der Leitspindel 11 ist eine Übertriebswelle 27 sichtbar, die im Getriebegehäuse 3 in geeigneten Lagern 28 gelagert ist. Die Übertriebswelle 27 trägt auf einem Übertriebswellen-Antriebszahnrad 39 einen Vorgelegezahnriemen 29, der das Leitspindel-Abtriebsrad 21 und eine Spannrolle 31 teilweise umschlingt. Die Spannrolle 31 ist auf einer verschieb- oder schwenkbar gelagerten Welle 33 aufgesetzt, welche zusätzlich auch eine Spannrolle 36 für den Hauptzahnriemen 25 tragen kann.

Auf der Übertriebswelle 27 sitzt ferner ein Übertriebswellen-Abtriebszahnrad 35 (aufgeschnitten dargestellt in Figur 5), auf dem ein Übertriebszahnradriemen 37 umläuft, der zudem eine auf der Leitspindel 11 aufgesetzte Leitmutter 41 bzw. ein darauf sitzendes Leitmutter-Antriebszahnrad 42 umschlingt. Das vordere Trum des Übertriebszahnriemens 37 ist in Figur 5 weggelassen. Die Leitmutter 41 ist im Leitspindelgehäuse 9 beispielsweise durch Wälzlager 43 axial unverschiebbar gelagert.

Die Leitspindel 11 weist im Bereiche der Leitmutter 41 ein Aussengewinde 45 auf, das mit einem entsprechenden in der Bohrung der Leitmutter 41 angeordneten Innengewinde (nicht dargestellt) kämmt. Damit sich die Leitspindel 11 in ihrer axialen Richtung verschieben kann, sind die beiden Leitspindel-Zahnräder 19,21 auf einer axial nicht verschiebbaren Hülse angeordnet, welche innen eine Feinzahnung aufweist, die mit der entsprechenden Gegenzahnung am Ende der Leitspindel 11 zusammenwirkt.

Wie insbesondere aus den Figuren 2 bis 4 ersichtlich, kann das Leitspindel-Abtriebsrad 21 und/oder das Übertriebswellen-Abtriebsrad 39 nach Abnehmen des Getriebegehäusedeckels 5 mit wenigen Handgriffen, d.h. nach Lösen entsprechender Feststellmittel, abgenommen und gegen ein anderes ausgewechselt werden. Zu diesem Zweck ist vorerst die Spannrolle 31 zu lösen. Letztere kann auch in einem Schlitz 49 geführt sein oder auf andere Weise (Figur 2) schwenkbar mit dem Getriebegehäuse 5 verbunden sein. Im Ausführungsbeispiel gemäss Figur 2 ist die Spannrolle an einer im Gehäuse 5 eingesetzten Lagerplatte 51 befestigt.

Ist für die Änderung des Übersetzungsverhältnisses ein Leitspindel-Abtriebsrad 21 mit einer Zähnezahl n notwendig, die sich beispielsweise nur um einen oder zwei Zähne unterscheidet, so genügt das Auswechseln des einen der beiden Zahnräder 21 oder 39. Ändert jedoch das Übersetzungsverhältnis beispielsweise im Verhältnis 1:2, so muss entweder ein kürzerer oder längerer Vorgelegezahnriemen 29 eingesetzt oder das jeweils andere Zahnrad ebenfalls ausgewechselt werden.

Der Aufbau des Getriebegehäuses 3 erlaubt es auch; den Motor 7, an der dem Leitspindelgehäuse 9 gegenüberliegenden Seite der Motortragplatte 4 am Getriebegehäuse 3 zu befestigen.

## Patentansprüche

1. Gewindeschneid-Vorrichtung (1) mit einer axial verschiebbar gelagerten Leitspindel (11), einem Leitspindelantrieb und durch Überholen oder Nachlaufen einer Leitmutter (41) erzeugtem Vor- und Rückschub eines am vorderen Ende (13) der Leitspindel (11) sitzenden Gewindeschneidkopfes, wobei die Leitspindel (11) und die Leitmutter (41) durch ein in einem Getriebegehäuse (3) angeordnetes Vorgelege in gegenseitiger Antriebsverbindung stehen und zwecks Änderung der Steigung des herzustellenden Gewindes eines der Zahnräder (21,39) des Vorgeleges auswechselbar ist, **dadurch gekennzeichnet, dass** der Antrieb des Vorgeleges durch einen ersten Hauptzahnriemen (25) erfolgt, welcher das Abtriebszahnrad (23) am Antriebsmotor (7) und das Leitspindel-Antriebszahnrad (19) auf der Leitspindel (11) mindestens teilweise umschlingt, dass ein Vorgelege-Zahnriemen (29) ein Leitspindel-Abtriebszahnrad (21) und ein Übertriebswellen-Antriebsrad (39) mindestens teilweise umschlingt, dass ein Übertriebszahnriemen (37) ein Übertriebswellen-Abtriebszahnrad (35) und ein Leitmutter-Antriebszahnrad (42) mindestens teilweise umschlingt und dass das Leitspindel-Abtriebszahnrad (21) oder das Übertriebswellen-Antriebszahnrad (39) durch je ein anderes, eine andere Zähnezahl (n) aufweisendes Zahnrad auswechselbar sind.

2. Gewindeschneid-Vorrichtung (1) nach Anspruch 1, **dadurch gekennzeichnet, dass** der Antriebsmotor (7) wahlweise über dem Leitspindelgehäuse (9) oder auf der gegenüberliegenden Seite des Getriebehäuses (3) an letzterem befestigbar ist.

3. Gewindeschneid-Vorrichtung (1) nach Anspruch 2, **dadurch gekennzeichnet, dass** der Antriebsmotor (7) an einer Motortragplatte (4) am Getriebegehäuse (3) befestigbar ist.

## Claims

1. Threading apparatus (1) having a lead screw (11), which is mounted so as to be axially displaceable, a lead screw driving means and forwards and reverse feed of a threading head, which is situated at the front end (13) of the lead screw (11), which forwards and reverse feed is created by overtaking or trailing behind a follower nut (41,) wherein the lead screw (11) and the follower nut (41) are in mutual driving connection by means of a primary gearing arrangement, which is disposed in the gear housing, and, for the purposes of modifying the inclination of the thread to be produced, one of the gear wheels (21, 29) of the primary gearing arrangement is interchangeable, **characterised in that** the driving of the primary gearing arrangement is effected by means of a first principal toothed belt (25), which at least partially winds around the driven gear wheel (23) on the drive motor (7) and the lead screw driving gear wheel (19) on the lead screw (11), **in that** a primary gearing arrangement toothed belt (29) at least partially winds around a lead screw driven gear wheel (21) and a transmission shaft driving wheel (39), **in that** a transmission toothed belt (37) at least partially winds around a transmission shaft driven gear wheel (35) and a follower nut driving gear wheel (42), and **in that** the lead screw driven gear wheel (21) or the transmission shaft driving gear wheel (39) are each interchangeable with another gear wheel, which has another number (n) of teeth.

2. Threading apparatus (1) according to claim 1, **characterised in that** the drive motor (7) is securable in an arbitrary manner above the lead screw housing (9) or on the oppositely situated side of the gear housing (3) on the latter.

3. Threading apparatus (1) according to claim 2, **characterised in that** the drive motor (7) is securable on a motor support plate (4) on the gear housing (3).

## Revendications

1. Dispositif de taraudage (1), avec une vis-mère (11) montée à coulissement axial, un entraînement de vis-mère et un avancement/recul, produit par devancement ou poursuite d'un écrou (41) de vis-mère, d'une tête de taraudage montée à l'extrémité avant (13) de la vis-mère (11), la vis-mère (11) et l'écrou (41) de vis-mère étant en liaison d'entraînement mutuelle au moyen d'un renvoi disposé dans un boîtier de transmission (3), et une des roues dentées (21, 39) du renvoi pouvant être remplacée afin de modifier le pas du filetage à réaliser, **caractérisé en ce que** l'entraînement du renvoi s'effectue au moyen d'une première courroie dentée principale (25), qui s'enroule au moins partiellement autour de la roue dentée (23) de sortie sur le moteur d'entraînement (7) et de la roue dentée (19) d'entraînement de vis-mère sur la vis-mère (11), **en ce qu'**une courroie dentée (29) de renvoi s'enroule au moins partiellement autour d'une roue dentée (21) de sortie de vis-mère et d'une roue d'entraînement (39) d'arbre de transmission, **en ce qu'**une courroie dentée (37) de transmission s'enroule au moins partiellement autour d'une roue dentée (35) de sortie d'arbre de transmission et d'une roue dentée (42) d'entraînement d'écrou de vis-mère, et **en ce que** la roue dentée (21) de sortie de vis-mère ou la roue dentée (39) d'entraînement d'arbre de transmission peuvent être chacune remplacées par une autre roue dentée, présentant un autre nombre (n) de dents.

2. Dispositif de taraudage (1) selon la revendication 1, **caractérisé en ce que** le moteur d'entraînement (7) peut être, au choix, fixé sur le boîtier de transmission (3) soit au-dessus du boîtier (9) de vis-mère, soit sur le côté opposé dudit boîtier de transmission (3).

3. Dispositif de taraudage (1) selon la revendication 2, **caractérisé en ce que** le moteur d'entraînement (7) peut être fixé sur le boîtier de transmission (3) sur une plaque (4) porteuse de moteur.
